# EUROPEAN PATENT APPLICATION

(11) **EP 4 570 061 A1**
(43) Date of publication of application: **18.06.2025**
(21) Application number: 23216119.0
(22) Date of filing: 13.12.2023
(51) Int. Cl.: A01G 23/083

(54) **HARVESTER HEAD SYSTEM**

(71) Applicant: Deere & Company, Moline, IL 61265 (US)
(72) Inventor: Alfthan, Arto, Mannheim (DE); Palmroth, Laurie, Mannheim (DE); Neovonen, Timo, Mannheim (DE); Suonurmi, Olli, Mannheim (DE)
(74) Representative: Lavall, Christian Henner

(57) **Abstract**

It is disclosed a harvester head system (10), adapted to be used on a forest harvester vehicle, comprising a harvester head (20), adapted to be movably attached to a crane and to cut trees into logs, the harvester head (20) comprising at least upper knives (21), adapted to grab a tree stem or logs, the harvester head (20) further comprising at least a pair of feeding wheels (22), adapted to move a tree or logs relative to the harvester head (20), the harvester head (20) further comprising a cutting tool (23), the system (10) further comprising a main tilt actuator (30), adapted to turn the harvester head (20) from a vertical position to a first horizontal position around a horizontal axis (31), a secondary tilt actuator (32), adapted to turn the harvester head (20) to a second horizontal position, the second horizontal position comprising a larger turning angle than the first horizontal position.

## Description

The invention is a harvester head system for forest harvester vehicles, a forest harvester vehicle having a harvester head system and a method for a harvester head system adapted to be used on a forest harvester vehicle.

Harvesting vehicles are used to fell trees and facilitate log cutting. The vehicle has a crane with a harvester head used for the work. The harvester head is brought close to the tree, the harvester head embraces the stem with the harvester knives and uses a chain saw for a first cut. Afterwards the harvester head is drawn by the crane to a dedicated place where the cut logs are to be placed. The log cutting commences by the tree being in a held state in the harvester head and forwarding the stem by the feeding wheels and controlled cutting at determined intervals.

During this stage, the stem is tilted and held by the knives in the harvester head. Due to the weight of the stem, being on one side of the harvester head at the beginning of the work cycle, the tilt mechanism of the harvester head is under heavy load to keep a horizontal orientation of the harvester head during cutting. Further, the torque working to the knives, which are oriented on a side showing to the ground, is working against the hydraulic closing force of the knives and can lead to an opening movement of the knives, forcing the grip on the log, stem to loosen. This could require the operator of the harvester vehicle to reassess and abort the cutting procedure to reassure the grip on the stem.

Tilting of the harvester head is usually provided by a tilt actuator which is turning the complete harvester head relative to the crane and the tilt bracket from an upright or vertical position to a horizontal position if not into an angle larger than 90 degrees. The tilt actuator is optimized for a tilt upwards function leading to an inefficient tilt downwards function and thus reduced work productivity. The feeding movement of the stem inside the harvester head introduces skidding forces which require a higher hydraulic power for the upper knives and leads to higher fuel consumption and reduced efficiency of the harvester head system.

The invention is solving the above presented problems and enables a smooth processing of tree stems in a harvester head.

The invention solves the problem by providing a harvester head system according to the main and the subsequent claims.

Provided is a harvester head system, adapted to be used on a forest harvester vehicle, comprising a harvester head, adapted to be movably attached to a crane and to cut trees into logs, the harvester head comprising at least upper knives, adapted to grab a tree stem or logs, the harvester head further comprising at least a pair of feeding wheels, adapted to move a tree or logs relative to the harvester head, the harvester head further comprising a cutting tool, the system further comprising a main tilt actuator, adapted to turn the harvester head from a vertical position to a first horizontal position around a horizontal axis relative to the ground, a secondary tilt actuator, adapted to turn the harvester head to a second horizontal position relative to the ground, the second horizontal position comprising a larger turning angle than the first horizontal position.

The first and second tilt actuator can compensate for the counter acting torque being present on the harvester head. The main tilt actuator provides torque to turn the harvester head until a first angle. The secondary tilt actuator provides torque that enables the harvester head to continue turning until a second angle or a second horizontal position. The secondary tilt actuator can apply torque either at the same time, parallel to the main tilt actuator or apply torque when the main tilt actuator has reached its torque peak limit due to working pressure limits or geometric limits. The harvester head being turned into a second horizontal position can therefore avoid the state where the log inside the harvester head applies a torque that forces the upper knives in an opening position, further removing strain from any hydraulic actuators that move the upper knives into a closing position. The operator is released from permanently observing the state of the upper knives or the main tilt actuator during cutting operation. This leads to a smooth working progress and reduces stress and workload. Due to less strain on the upper knives and the hydraulic actuators the maintenance cycles are improved leading to longer operation times.

In another embodiment the main tilt actuator and the secondary tilt actuator can be attached to the harvester head so that they reach an end stop at different times during movement of the harvester head from a vertical position to a first or second horizontal position.

The main and secondary tilt actuator can move in serial setup or in parallel setup so that each of the main and secondary actuator stops at its own end stop when it has reached its highest torque limit or when both torques combined provide the highest torque to keep the harvester head in the turned state.

In another embodiment the system can comprise a separate control valve, adapted to hydraulically control solely the secondary tilt actuator.

The separate control valve can be controlled separately so that different kinematic behaviors of the turning movement of the harvester head can be provided. The separate control valve enables different turning speed, different torque curves or an adaptive torque depending on the different stem length or diameter or weight.

In another embodiment the separate control valve can be provided on the harvester head.

The separate control valve can be mounted on the harvester head, omitting the need for an exposed hydraulic line between the control valve and the secondary hydraulic actuator.

In another embodiment the separate control valve can be provided on the vehicle.

With the valve being provided on the vehicle, the setup can save operating weight of the harvester head. Further, maintenance can be simplified in comparison to the valve being provided on the harvester head, where the available space is more limited than on the harvester vehicle.

In another embodiment the first horizontal position can comprise an angle from 60 to 90 degrees to the vertical position.

The first horizontal position can provide a first optimal position of the harvester head to initiate feeding of the stem and start the cutting process. The stem can be feed constantly without ground contact. The soil receives less damage, and the knives are under no stress of additional torque, keeping these in a closed position.

In another embodiment the second horizontal position can comprise an angle from 0 to 20 degrees to the first horizontal position.

The second horizontal position can provide an additional angle for heavier or longer stems providing also additional turning torque. In case of progressing cutting the position of the harvester head can be optimized for accurate placing of the logs on the ground.

Another invention is a harvester vehicle comprising a crane, and a harvester head system, adapted to be used on a forest harvester vehicle, comprising a harvester head, adapted to be movably attached to a crane and to cut trees into logs, the harvester head comprising at least upper knives, adapted to grab a tree stem or logs, the harvester head further comprising at least a pair of feeding wheels, adapted to move a tree or logs relative to the harvester head, the harvester head further comprising a cutting tool, the system further comprising a main tilt actuator, adapted to turn the harvester head from a vertical position to a first horizontal position around a horizontal axis, a secondary tilt actuator, adapted to turn the harvester head to a second horizontal position, the second horizontal position comprising a larger turning angle than the first horizontal position.

The harvester vehicle can work with less operator stress. The first and second tilt actuator can compensate for the counter acting torque being present on the harvester head. The main tilt actuator provides torque to turn the harvester head until a first angle. The secondary tilt actuator provides torque that enables the harvester head to continue turning until a second angle or a second horizontal position. The secondary tilt actuator can apply torque either at the same time, parallel to the main tilt actuator or apply torque when the main tilt actuator has reached its torque peak limit due to working pressure limits or geometric limits. The harvester head being turned into a second horizontal position can therefore avoid the state where the log inside the harvester head applies a torque that forces the upper knives in an opening position, further removing strain from any hydraulic actuators that move the upper knives into a closing position. The operator is released from permanently observing the state of the upper knives or the main tilt actuator during cutting operation. This leads to a smooth working progress and reduces stress and workload. Due to less strain on the upper knives and the hydraulic actuators the maintenance cycles are improved leading to longer operation times.

In another embodiment the system can comprise a separate control valve, adapted to hydraulically control solely the secondary tilt actuator.

The separate control valve can be controlled separately so that different kinematic behaviors of the turning movement of the harvester head can be provided. The separate control valve enables different turning speed, different torque curves or an adaptive torque depending on the different stem length or diameter or weight.

In another embodiment the separate control valve can be provided on the harvester head.

The separate control valve can be mounted on the harvester head, omitting the need for an exposed hydraulic line between the control valve and the secondary hydraulic actuator.

In another embodiment the separate control valve can provided on the harvester vehicle.

With the valve being provided on the vehicle, the setup can save operating weight of the harvester head. Further, maintenance can be simplified in comparison to the valve being provided on the harvester head, where the available space is more limited than on the harvester vehicle.

Another invention is a method for a harvester head system, adapted to be used on a forest harvester vehicle, comprising a harvester head, adapted to be movably attached to a crane and to cut trees into logs, the harvester head comprising at least upper knives, adapted to grab a tree stem or logs, the harvester head further comprising at least a pair of feeding wheels, adapted to move a tree or logs relative to the harvester head, the harvester head further comprising a cutting tool, the system further comprising a main tilt actuator, adapted to turn the harvester head from a vertical position to a first horizontal position around a horizontal axis, a secondary tilt actuator, adapted to turn the harvester head to a second horizontal position, the second horizontal position comprising a larger turning angle than the first horizontal position, so that the main tilt actuator is driving the harvester head from a vertical position to a first horizontal position, and the secondary tilt actuator is driving the harvester head from a first horizontal position to a second horizontal position.

The method can offer a smooth operation during the cutting phase and can reduce the operator stress due to the secondary tilt actuator. The first and second tilt actuator can compensate for the counter acting torque being present on the harvester head. The main tilt actuator provides torque to turn the harvester head until a first angle. The secondary tilt actuator provides torque that enables the harvester head to continue turning until a second angle or a second horizontal position. The secondary tilt actuator can apply torque either at the same time, parallel to the main tilt actuator or apply torque when the main tilt actuator has reached its torque peak limit due to working pressure limits or geometric limits. The harvester head being turned into a second horizontal position can therefore avoid the state where the log inside the harvester head applies a torque that forces the upper knives in an opening position, further removing strain from any hydraulic actuators that move the upper knives into a closing position. The operator is released from permanently observing the state of the upper knives or the main tilt actuator during cutting operation. This leads to a smooth working progress and reduces stress and workload. Due to less strain on the upper knives and the hydraulic actuators the maintenance cycles are improved leading to longer operation times.

In another embodiment a control unit of the harvester system can be provided and can control the main and secondary tilt actuator in a way so that when the main tilt actuator has reached its movement limit, the secondary tilt actuator is driving the harvester head or the opposite.

The main and secondary tilt actuator can move in serial setup or in parallel setup so that each of the main and secondary actuator stops at its own end stop when it has reached its highest torque limit or when both torques combined provide the highest torque to keep the harvester head in the turned state.

The inventions will further be described in Figures 1 to 5, wherein
Fig. 1 depicts a first view of the harvester head system in a vertical position;
Fig 2 shows a second view of the harvester head system in an angled position;
Fig 3 depicts a third view of the system in another angled position;
Fig. 4 shows a fourth view of the system in a 90 degrees angled position;
Fig. 5 shows the system and its function.

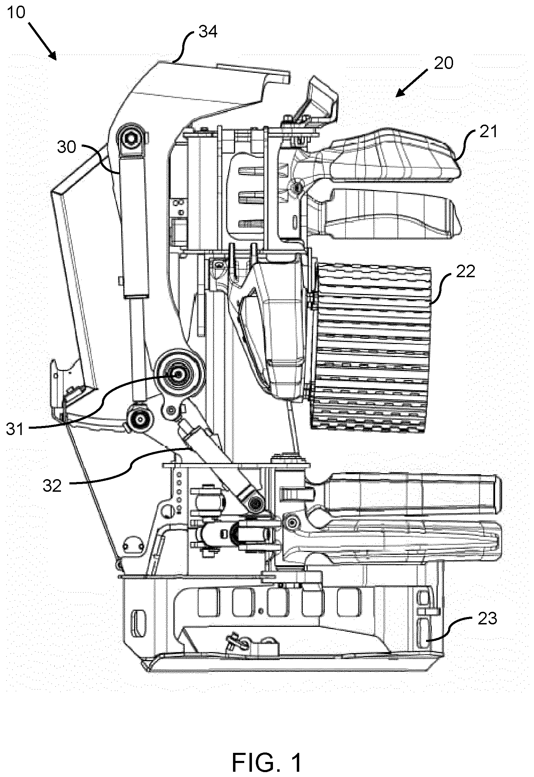

The harvester head system 10 as shown in FIG. 1 comprises a harvester head 20 that has a horizontal turning axis to bring the harvester head 20 from an upright or vertical position relative to the ground to a horizontal position or even to a position that has more than a 90 degrees turning angle.

The harvester head 20 has a pair of upper knives 21 which are used to grab around a tree stem and remove branches during the feeding process. In a vertical orientation, the feeding wheels 22 are below the upper knives 21. The feeding wheels 22 are placed on the outer surface of the stem and driven so that the stem can be moved in its longitudinal direction through the harvester head 20. Both the upper knives 21 and the feeding wheels 22 can be adjusted according to the stem measurements.

Below the feeding wheels 22 the harvester head 20 can also comprise lower knives which are used to keep the stem in position in addition to removing branches. This also can increase the precision of the cutting process.

The cutting tool 23 can be provided at a bottom of the harvester head 20 inside a saw box. In use the cutting tool 23 is moved into the stem at certain length increments.

The harvester head 20 comprises a main tilt actuator 30 that is attached to a chassis of the harvester head 20 and tilt bracket 34. The tilt bracket 34 is attached to the crane of the forestry vehicle during operation, so that the tilt bracket 34 maintains a vertical orientation in relation to the ground.

The main tilt actuator 30 can be driven by hydraulic or electric power, wherein electrical power renders a separate control valve obsolete. As can be seen in FIG. 1 the main tilt actuator 30 is in an extended state when the harvester head 20 is in vertical orientation. In order to turn the harvester head 20 relative to the ground, that main tilt actuator 30 has to retract so that a momentum around the turning axis is increased, moving the chassis of the harvester head 20 relative to the tilt bracket 34.

The harvester head system 10 comprises a secondary tilt actuator 32 which can be driven by hydraulic or electric power. In case the secondary tilt actuator 32 is driven by hydraulic power, a secondary separate hydraulic control valve can be provided.

The secondary tilt actuator 32 is in a retracted state when the harvester head 20 is a vertical orientation. During the turning of the harvester head 20, the secondary tilt actuator 32 is extending to increase a momentum around the turning axis. As can be seen in FIG. 1 in its initial vertical orientation of the harvester head 20, the secondary tilt actuator 32 is in a position where it can not extend at the beginning of the turning movement, as this would increase a momentum in an opposite direction of the main tilt actuator 30. The secondary tilt actuator 32 can be used advantageously from a turning angle of about 40 degrees or larger, when the fixpoint of the secondary tilt actuator 32 on the tilt bracket 34 has turned sufficiently to increase the turning momentum in the same direction as the main tilt actuator 30.

The momentum of the main and the secondary tilt actuator 32 is increasing the turning torque of the harvester head 20, especially during the feeding process. During feeding, especially at the beginning of the feeding process, the free end of the stem is contacting the ground, resulting in skidding forces on the harvester head 20, the skidding forces are increasing the necessary torque for tilting the harvester head 20, so that the provision of the secondary tilt actuator 32 is increasing the performance of the system 10.

At a higher tilting angle, being at 90 degrees or larger relative to the vertical position, the main tilt actuator 30 is moving into the upper limit, so that no more momentum can be provided. At this stage the secondary tilt actuator 32 can provide turning momentum and to keep the harvester head 20 in a tilted state increasing work performance of the system 10.

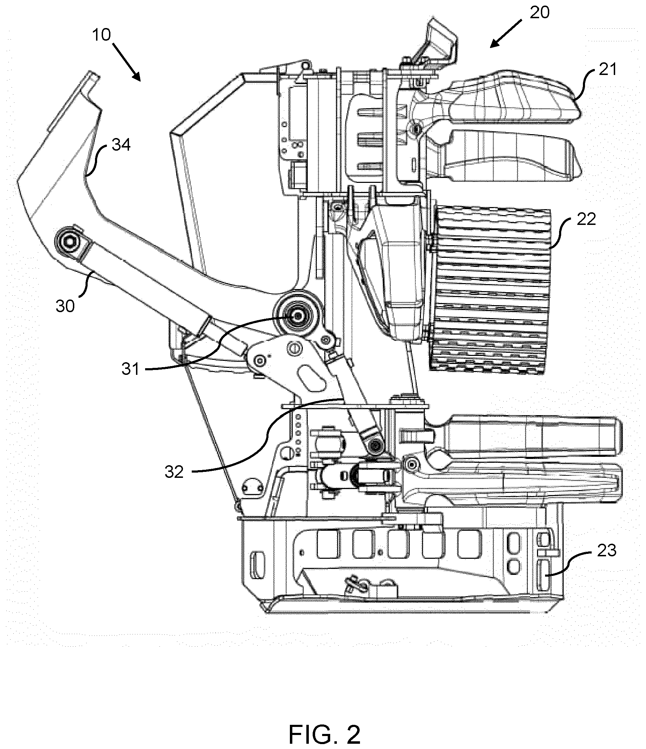

In **FIG. 2** the harvester head 20 is shown in a first tilted position of about 40 to 45 degrees visible by the position of the tilt bracket 34. **FIG. 2** depicts the harvester head system 10 in difference to a real application, where the tilt bracket 34 will always be attached to the crane and the upside of the tilt bracket 34 will always be oriented to the crane side and in a vertical position relative to the ground.

The main tilt actuator 30 in **FIG. 2** is partly retracted and is nearing its end stop in the fully retracted position. At such a full retracted state, the main tilt actuator 30 cannot add any further momentum to the tilt movement and the use of the main tilt actuator 30 alone can lead to an unstable tilt behavior of the harvester head 20. The secondary tilt actuator 32 is moved out of its base position as shown in **FIG. 1** so that from the position in **FIG. 2** any extension of the secondary tilt actuator 32 will further increase momentum to the tilt movement, adding to the accuracy and controllability of the harvester head system 10.

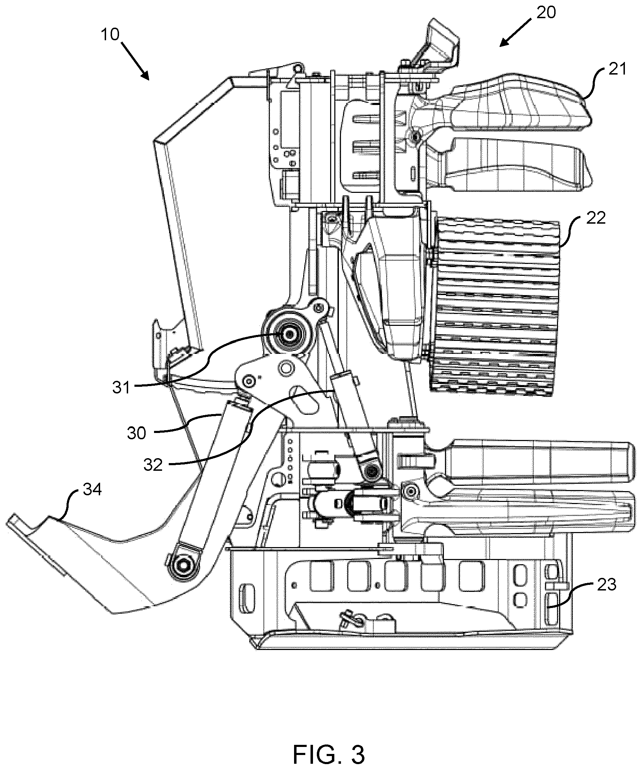

**FIG. 3** shows the harvester head system 10 in a maximum tilt position. The main tilt actuator 30 is in fully retracted position whereas the secondary tilt actuator 32 is in fully extended position. This makes the benefit of the harvester head system 10 visible, in that the secondary tilt actuator 32 can hold or increase momentum of the tilt movement when the main tilt actuator 30 is unable to provide any momentum due to physical limitations.

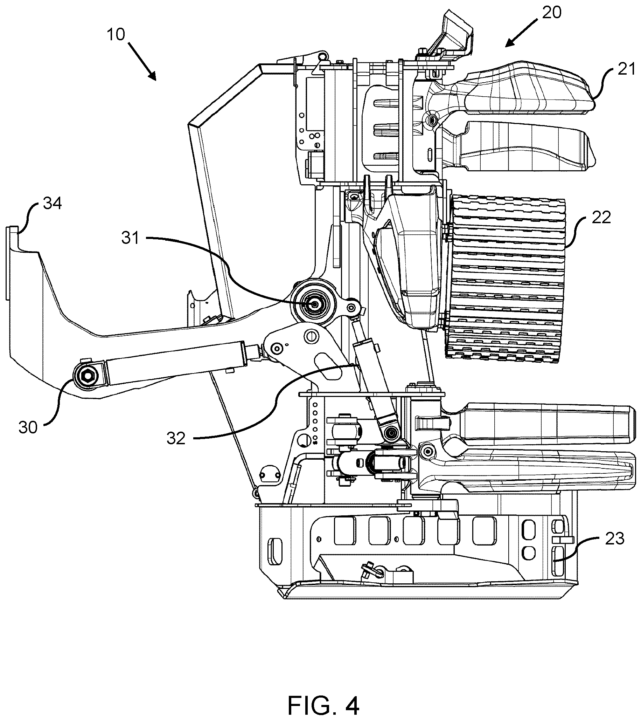

**FIG. 4** shows a position of about 90 degrees tilt of the harvester head system 10. The secondary tilt actuator 32 is in a partly extended position and can add momentum to the tilt movement, whereas the main tilt actuator 30 is at a limit of its movement and can only add reduced momentum due to the physical restrictions near the end stop.

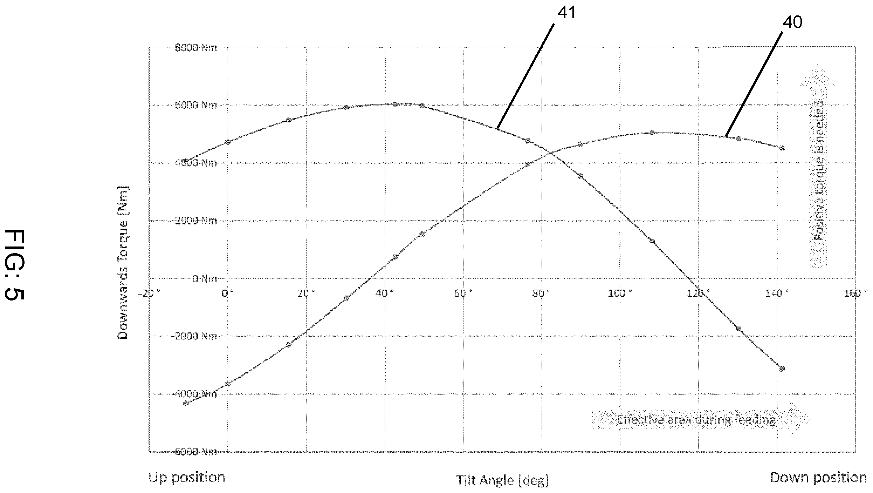

**FIG. 5** shows a diagram of the torque or momentum of the main and secondary tilt actuator 32 on the ordinate during a tilt movement from a vertical or upright position until a maximum down position as shown in **FIG. 3****.** On the left scale the available torque is displayed that can be used by the main and secondary actuator for the tilt movement or for holding the tilt position. On the abscissa the tilt angle is displayed wherein the angle from 0 up until 90 is not used during feeding or cutting but is only used during the felling of the tree and does not add any benefit to the work operation.

Curve 41 represents the torque behavior of the main tilt actuator 30. Due to the physical conditions and the design of the harvester head system 10, the main tilt actuator 30 has a very high available torque from the initial upright or vertical position which increases in momentum until about 40 degrees tilt angle, when the main tilt actuator 30 begins to move into the fully retracted position. It is visible in **FIG. 5** that the use of the main tilt actuator 30 alone without the secondary tilt actuator 32 is not offering any momentum from a tilt angle of 120 degrees onwards.

The secondary tilt actuator 32 is shown with curve 40 and it can be seen that at the upright or vertical position the secondary tilt actuator 32 is not able to increase momentum of the torque due to the positioning. This can also be seen in **FIG. 1** where the initial position is not allowing to increase the torque around the horizontal axis 31 in the same direction as the main tilt actuator 30.

From a tilt position of about 40 degrees or more, the secondary tilt actuator 32 is passively moved into the correct orientation around the horizontal axis 31, so that active pressure or force can be applied to increase momentum or to increase holding torque at the tilt position.

**FIG. 5** also clarifies that at an angle of about 80 degrees or more the main tilt actuator 30 is steadily losing the ability to apply torque whereas the secondary tilt actuator 32 applies its maximum torque by a tilt angle of about 110 degrees. This enables in summary a smooth torque load curve wherein the secondary tilt actuator 32 compensates for the loss of torque in the main tilt actuator 30.

The invention offers an extended torque application over a wider tilt angle to compensate the skidding forces of the cutting operation applied to the harvester head 20.

The secondary tilt actuator 32 can be controlled by a separate control valve, enabling distinguished control curves and movements of the secondary tilt actuator 32. The separate control valve can either be placed on the harvester head system 10 or on the harvester vehicle. If provided on the harvester head 20, the risk of rupture of the power lines can be minimized as the connection lengths can be reduced, also the response time of the secondary tilt actuator 32 is reduced, leading to a timely control and fluid work operation.

## Claims

1. Harvester head system (10), adapted to be used on a forest harvester vehicle, comprising
a harvester head (20), adapted to be movably attached to a crane and to cut trees into logs,
the harvester head (20) comprising at least upper knives (21), adapted to grab a tree stem or logs,
the harvester head (20) further comprising at least a pair of feeding wheels (22), adapted to move a tree or logs relative to the harvester head (20),
the harvester head (20) further comprising a cutting tool (23),
the system (10) further comprising
a main tilt actuator (30), adapted to turn the harvester head (20) from a vertical position to a first horizontal position around a horizontal axis (31),
a secondary tilt actuator (32), adapted to turn the harvester head (20) to a second horizontal position, the second horizontal position comprising a larger turning angle than the first horizontal position.

2. Harvester head system (10) according to claim 1, the main tilt actuator (30) and the secondary tilt actuator (32) are attached to the harvester head (20) so that they reach an end stop at different times during movement of the harvester head (20) from a vertical position to a first or second horizontal position.

3. Harvester head system (10) according to any of the preceding claims, wherein the system (10) comprises a separate control valve, adapted to hydraulically control solely the secondary tilt actuator (32).

4. Harvester head system (10) according to any of the preceding claims, wherein the separate control valve is provided on the harvester head (20).

5. Harvester head system (10) according to any of the preceding claims 1 to 3, wherein the separate control valve is provided on the vehicle.

6. Harvester head system (10) according to any of the preceding claims, wherein the first horizontal position comprises an angle from 60 to 90 degrees to the vertical position.

7. Harvester head system (10) according to any of the preceding claims, wherein the second horizontal position comprises an angle from 0 to 20 degrees to the first horizontal position.

8. Harvester vehicle comprising a crane, and a harvester head system (10),
adapted to be used on a forest harvester vehicle, comprising
a harvester head (20), adapted to be movably attached to a crane and to cut trees into logs,
the harvester head (20) comprising at least upper knives (21), adapted to grab a tree stem or logs,
the harvester head (20) further comprising at least a pair of feeding wheels (22), adapted to move a tree or logs relative to the harvester head (20),
the harvester head (20) further comprising a cutting tool (23),
the system (10) further comprising
a main tilt actuator (30), adapted to turn the harvester head (20) from a vertical position to a first horizontal position around a horizontal axis (31),
a secondary tilt actuator (32), adapted to turn the harvester head (20) to a second horizontal position, the second horizontal position comprising a larger turning angle than the first horizontal position.

9. Harvester vehicle according to claim 8, wherein the system (10) comprises a separate control valve, adapted to hydraulically control solely the secondary tilt actuator (32).

10. Harvester vehicle according to any of the preceding claims 8 and 9, wherein the separate control valve is provided on the harvester head (20).

11. Harvester vehicle according to any of the preceding claims 8 to 9, wherein the separate control valve is provided on the harvester vehicle.

12. Method for a harvester head system (10), adapted to be used on a forest harvester vehicle, comprising
a harvester head (20), adapted to be movably attached to a crane and to cut trees into logs,
the harvester head (20) comprising at least upper knives (21), adapted to grab a tree stem or logs,
the harvester head (20) further comprising at least a pair of feeding wheels (22), adapted to move a tree or logs relative to the harvester head (20),
the harvester head (20) further comprising a cutting tool (23),
the system (10) further comprising
a main tilt actuator (30), adapted to turn the harvester head (20) from a vertical position to a first horizontal position around a horizontal axis (31),
a secondary tilt actuator (32), adapted to turn the harvester head (20) to a second horizontal position, the second horizontal position comprising a larger turning angle than the first horizontal position,
so that the main tilt actuator (30) is driving the harvester head (20) from a vertical position to a first horizontal position, and the secondary tilt actuator (32) is driving the harvester head (20) from a first horizontal position to a second horizontal position.

13. Method according to claim 12, wherein a control unit of the harvester system (10) is provided and controlling the main and secondary tilt actuator (32) in a way so that when the main tilt actuator (30) has reached its movement limit, the secondary tilt actuator (32) is driving the harvester head (20) or the opposite.
